Europäisches Patentamt

European Patent Office

Office européen des brevets

(11) Publication number: **0 128 682**
A1

# EUROPEAN PATENT APPLICATION

(21) Application number: **84303448.9**

(22) Date of filing: **22.05.84**

(51) Int. Cl.³: **C 23 G 1/14**, C 23 G 1/20

(30) Priority: **10.06.83 US 503035**

(43) Date of publication of application: **19.12.84**
**Bulletin 84/51**

(84) Designated Contracting States: **AT DE FR GB IT SE**

(71) Applicant: **HUNTINGTON ALLOYS, INC., Huntington West Virginia 25720 (US)**

(72) Inventor: **Robinson, Mark Louis, 65 South Street, Warwick New York 10990 (US)**
Inventor: **Pye, Lenwood David, R.D. 1, Alfred Station New York 14803 (US)**

(74) Representative: **Lockwood, Barbara Ann et al, Thames House (Fifth Floor) Millbank, London SW1P 4QF (GB)**

(54) **Method for removing glass lubricants from extrusions.**

(57) A method for the removal of glass lubricant from an extruded product in which an alkaline reagent is applied to the glass to render it soluble in a liquid medium such as glass or acid, and the glass is subsequently removed by rinsing with or immersion in the liquid.

EP 0 128 682 A1

## Method for removing glass
## lubricants from extrusions

The present invention relates to hot extrusion processes and in particular to a method for removing glass lubricants which adhere to extruded surfaces.

Glass has been widely used as a lubricant for the hot extrusion of metals such as steel, titanium, stainless steel, nickel-based alloys and refractory metals. It is an ideal lubricant for a number of reasons, being relatively inexpensive and clean, and readily applied to billet and die surfaces in its solid state. Travelling through the die it melts and forms a lubricating shield between the workpiece and the die, at the same time affording a degree of thermal insulation to the workpiece. Other advantages are that because glass is not crystalline its viscosity can be easily adjusted to provide appropriate flow characteristics required at various temperatures, and because it is generally non-hazardous to humans. Since the early 1950's, glass lubrication techniques have been refined so that glasses may be utilised at high working temperatures (1225°C) to give good surface finishes and acceptable die lives.

Upon egress from the die, the glass lubricant solidifies, providing a protective cover over the extrudate. This however must be removed prior to subsequent hot or cold working. Such removal presents problems because the glasses used are relatively inert. Mechanical means such as sand or shot blasting can be used for cleaning the outside of extrusions but it is very difficult to blast the inner diameter of long tube shells. Chemical processes such as immersion in hot aggressive molten salt baths at about 540°C may be useful but present the problem of poor circulation through the bore.    Other chemical processes include the use of acid stripping baths consisting of hydrofluoric acid, hydrochloric acid, nitric acid or sulphuric acid.    The latter three acids are not very effective, whereas hydrofluoric acid, which reacts very strongly with glass, may also corrode the workpiece.    Moreover these acids present disposal problems.    Glass producers have developed modified glasses for easier removal, but these are expensive.

By glass herein is meant any inorganic or organic product of fusion which has cooled to a solid condition without crystallisation.

The present invention is based on the discovery of a process for removing commonly available glass from extruded products.

According to the present invention there is provided a method for removing glass lubricant from an extruded product comprising applying to a hot glass-coated extrudate an alkaline reagent which reacts with the glass lubricant to render it soluble in a liquid medium and thereafter treating the extrudate with the liquid medium whereby the glass lubricant is removed from the extruded product.

Advantageously the liquid medium is water or acid.  Suitable alkaline reagents which will render a glass lubricant water or acid soluble include alkali metal carbonates, bicarbonates such as $NA_2CO_3$ (sodium carbonate-soda ash), $NaHCO_3$ (sodium bicarbonate-baking soda), $Li_2CO_3$ (lithium carbonate), $LiHCO_3$ (lithium bicarbonate), $K_2CO_3$ (potassium carbonate), $KHCO_3$ (potassium bicarbonate); alkali metal borates including $B_2O_3$ (boron oxide), $Na_2B_4O_7$ (sodium tetraborate-borax), $NaBO_2$ (sodium borate); and alkali metal fluorides such as $Na_3AlF_6$ (sodium aluminium fluoride-cryolite) and $NaKF_2$ (sodium potassium fluoride).    Mixtures may also be used.    Alkali metal hydroxides may also be utilised but are more hazardous to handle.

In its preferred mode of operation, powdered reagent is dusted on the hot extrudate, and left in contact at a temperature above the melting point of the reagent for at least thirty seconds, and then sprayed with, or immersed in water or acid to remove the glass lubricant.  Preferably the water or acid is at a temperature of around 50°C or more.

It has been found that the reaction between the treatment reagent and the glass proceeds most efficiently when the temperature of the extrudate is maintained as high as possible.  High temperatures keep the reacting species liquid and enhance the reaction kinetics.  Although it is preferred to coat hot extrusions as they leave the die, since this is energy-efficient, the method of the present invention may be applied to cooling, or cold, extrudates, the workpiece being heated to the desired temperature before being coated with the alkaline reagent.

The preferred alkaline reagent, particularly in terms of cost effectiveness is soda ash ($Na_2Co_3$). This is readily available and quite inexpensive.  After use on a hot extruded bar and rinsing in hot tap water for 30 minutes the extruded bar was free of glass. Subsequent acid pickling resulted in a clean shiny bar. Other preferred reagents are the alkali metal carbonates, sodium bicarbonate and cryolite.  Borax and sodium borate are not quite so effective and sodium silicate has been found to be inaffective since it does not react with or dilute the glass significantly.

It is postulated that the method operates in the following manner.  When an alkali metal carbonate contacts the hot extrudate, it decomposes into metal oxide plus carbon dioxide.  Indeed some gas evolution is observed during such treatment.  The metal oxide reacts with the silica in the glass to form an alkali metal silicate, which is water and acid soluble. Alkali metal hydroxides react similarly with the silica in the glass, but may be more hazardous to handle than carbonates. Boron containing compounds react with silica to form borosilicates which are water soluble, but less so than the alkali metal silicates. The reaction between cryolite and glass is less clear but compounds containing fluoride ions are known to be effective fluxing agents.

Some examples will now be given.

### Example 1

A series of billets of INCONEL alloy 600 bar were extruded using various reagents and deglassing rinses. The glass lubricant was provided as a powder surface over the billet before placement in an extrusion press, or in the form of a glass pad or a batt between the ram of the press and the billet and/or between the billet and the die. The hot extruded products were treated with various reagents, placed in a hot water deglassing rinse, neutralised in an acid dip and then pickled in standard sulphuric acid and nitric acid baths, and subjected to visual examination for glass removal. Extrusion conditions for each trial were:- temperature 1232°C, die size 19 mm, reduction 22:1, throttle setting 50%, ram speed 63 to 152 mm/sec.

The compositions of glass lubricants used are given in Table I.

## TABLE I

| | Glass Type | $SiO_2$ | $Na_2O$ | $B_2O_3$ | $Al_2O_3$+FeO | CaO | MgO |
|---|---|---|---|---|---|---|---|
| 1. | AWXS R-26 (pad) | 48 | 15 | 9 | 11 | 15 | >1 |
| 2. | E (Fibre batt) | 53 | 2.5 | 7 | 15 | 21 | >1 |
| 3. | 7740 (powder) | 73 | 7 | 13 | 7 | >1 | >1 |
| 4. | Window (powder) | 71 | 15 | >1 | 1 | 13 | >1 |

Glass types 1 and 2 are supplied by Owens Corning Fiberglas and type 3 by Corning Glassworks. The compositions given are based on vendor analysis and are in weight percent. In initial tests glass lubricant 1 was used. Bars of 19 mm diameter and about 152 mm length were extruded and divided into sections. Soda ash ($Na_2CO_3$) powder was dusted onto a section of the hot bar and the treated section rinsed in hot tap water at about 50°C. After about 30 minutes the bar was free of glass. The bar was then pickled to give a clean shiny bar whereas the untreated section exhibited a heavy glass coating after a similar water rinse and pickling procedure.

The pickling procedure used was as follows:-

a)  5-10 minutes in 20% $HNO_3$ at 60 to 70°C to neutralise residue from treatment; water rinse.

b)  5-10 minutes in 20% $H_2SO_4$, 5% NaCl, 5% $NaNO_3$ solution at 60 to 70°C; water rinse.

c)  5-10 minutes in 20% $HNO_3$ at 60 to 70°C.

d)  5-10 minutes in 7.5% $HNO_3$, 5% NaCl solution at 60 to 70°C; water rinse and dry.

The procedure was repeated using other alkali metal carbonates, sodium carbonate and cryolite giving good results. When borax and sodium borate were used the treatment was not 100% effective in so far as some small islands of glass were left on the bars. Sodium silicate, although itself water soluble, had no effect.

## Example 2

Further trials were run on rectangular extrusions 50.8 x 152.4 x 19 mm to optimise conditions. It was found that the temperature of the extrudate should be sufficient to ensure that it remains above the melting point of the reagent for thirty seconds or more. In the case of soda ash the melting point is 851°C. Most tests were conducted at about 1075°C, but it appeared that higher temperatures enhanced the kinetics of the reaction. It was found that a coating range of 0.1 $g/cm^2$ to 1.2 $g/gm^2$ gave satisfactory results for soda ash. It was also ascertained that a minimum of about 15 minutes rinsing is desirable for the removal of the solubilised glass from the extruded bar.

## Example 3

The tests of Examples 1 and 2 were repeated using glass 2 giving similar results. Tests with glasses 3 and 4 were evaluated differently because an extrusion lubrication pad could not be made from the powder frit. Instead INCONEL alloy 600 plate was used in the form of a disc about 95 mm diameter and 12.7 mm thick, heated in air, coated with glass and treated. The disc was heated to 1230°C and coated with glass 3 and then treated at 1070°C with soda ash, and was found to be clean after a hot water deglass and pickle.

Application of the process to window glass 4, which has a higher melting point showed that a higher temperature, of about 1170°C, was necessary for treatment with soda ash, such temperatures leading to complete removal of glass.

Claims

1.        A method for removing glass lubricant from an extruded product characterised in that there is applied to a hot glass-coated extrudate an alkaline reagent which reacts with the glass lubricant to render it soluble in a liquid medium and thereafter treating the extrudate with the liquid medium whereby the glass lubricant is removed from the extruded product.

2.        A method as claimed in claim 1 in which the alkaline reagent is an alkali metal carbonate or bicarbonate, an alkali metal borate, an alkali metal hydroxide or an alkali metal fluoride, or mixtures thereof.

3.        A method as claimed in claim 1 or claim 2 in which the reagent is $Na_2CO_3$, $NaHCO_3$, $LiCO_3$, $K_2CO_3$, $LiHCO_3$ or $KHCO_3$ or mixtures thereof.

4.        A method as claimed in claim 1 or claim 2 in which the reagent is $B_2O_3$, $Na_2B_4O_7$ or $NaBO_2$ or mixtures thereof.

5.        A method as claimed in claim 1 or claim 2 in which the reagent is $Na_3AlF_6$ or $NaKF_2$ or mixtures thereof.

6.        A method as claimed in any preceding claim in which the liquid medium is water, or an acid solution.

7.        A method as claimed in claim 6 in which the acid is nitric acid, sulphuric acid, hydrochloric acid or hydrofluoric acid.

8.        A method as claimed in any preceding claim and in which the alkaline reagent is in contact with the glass coating for at least thirty seconds at a temperature above the melting point of the reagent.

9.        A method as claimed in any preceding claim in which the treatment with the liquid medium extends for at least fifteen minutes.

10.       A method as claimed in any preceding claim in which from 0.1 to 1.2 $g/cm^2$ of the alkaline reagent

0128682

is applied to the glass coating.

11.          A method as claimed in any preceding
claim in which the extrudate is a nickel-based alloy.

0128682
Application number

**European Patent Office**

**EUROPEAN SEARCH REPORT**

EP 84303448.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | AT - B - 295 957 (COLGATE-PALMOLIVE COMPANY)  * Examples; claims * | 1-3 | C 23 G 1/14  C 23 G 1/20 |
| A | DE - B - 1 190 763 (HANS OETIKER, METALLWAREN- UND APPARATEBAU)  * Claims * | 1,4 | |
| A | GB - A - 1 579 760 (UNION CARBIDE AGRICULTURAL PRODUCTS COMPANY INC)  * Examples; claims * | 1-4,8 | |
| A | GB - A - 1 545 890 (XEROX CORPORATION)  * Examples; claims * | 1-3,8, 11 | |
| A | GB - A - 713 909 (THE MOND NICKEL COMPANY LIMITED)  * Totality * | 1-3,5- 8,11 | **TECHNICAL FIELDS SEARCHED (Int. Cl. ³)**  C 23 G |

The present search report has been drawn up for all claims

| Place of search | Date of completion of the search | Examiner |
|---|---|---|
| VIENNA | 10-08-1984 | SLAMA |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82